Europäisches Patentamt

(19) European Patent Office

Office européen des brevets

(11) Numéro de publication: **0 070 756**
**B1**

(12) # FASCICULE DE BREVET EUROPEEN

(45) Date de publication du fascicule du brevet:
19.06.85

(51) Int. Cl.⁴: **F 25 B 15/12,** F 25 B 29/00,
C 09 K 5/04

(21) Numéro de dépôt: **82401237.1**

(22) Date de dépôt: **01.07.82**

(54) **Procédé de production de froid et/ou de chaleur mettant en oeuvre un cycle à absorption utilisant le dioxyde de carbone comme fluide de travail.**

(30) Priorité: **16.07.81 FR 8114049**

(43) Date de publication de la demande:
**26.01.83 Bulletin 83/4**

(45) Mention de la délivrance du brevet:
**19.06.85 Bulletin 85/25**

(84) Etats contractants désignés:
**AT BE CH DE GB IT LI NL SE**

(56) Documents cités:
**CH - A - 117 856**
**FR - A - 716 988**
**FR - A - 2 440 393**
**US - A - 2 182 098**
**US - A - 2 182 453**
**US - A - 2 290 532**
**US - A - 3 124 939**

(73) Titulaire: **INSTITUT FRANCAIS DU PETROLE, 4, Avenue de Bois-Préau, F-92502 Rueil-Malmaison (FR)**

(72) Inventeur: **Rojey, Alexandre, 29-33, rue Henri Régnault, F-92380 Garches (FR)**
Inventeur: **Cheron, Jacques, 76 bis, rue du Maréchal Foch, F-78600 Maisons Laffitte (FR)**

BUNDESDRUCKEREI BERLIN

**Description**

La présente invention est relative à un nouveau procédé de production de froid et/ou de chaleur au moyen d'un cycle à absorption, ce cycle étant basé sur l'absorption et la désorption successives d'une phase gazeuse formée au moins en partie de dioxyde de carbone.

Les procédés de production de froid et/ou de chaleur au moyen de cycles à absorption utilisent généralement soit le couple eau-ammoniac, soit le couple eau-bromure de lithium. Ces deux couples présentent un certain nombre d'inconvénients. Le couple eau-ammoniac conduit à des problèmes de sécurité en raison de la toxicité et de l'inflammabilité de l'ammoniac. Le couple eau-bromure de lithium présente de son côté de nombreaux inconvénients: risques de cristallisation du bromure de lithium, corrosion, pressions de fonctionnement très basses entrainant des risques d'entrée d'air, impossibilité d'opérer à basse température pour éviter le gel de l'eau. D'autres fluides ont été proposés, tels que par exemple les couples formés par un fluide halogéné tel que le difluorochlorométhane (R-22) et un solvant organique tel que le dimethyltetraethylène glycol (DMTEG), mais ces fluides conduisent à des performances réduites et à des taux de recirculation de solution éleves; ils posent, en outre, des problèmes de stabilité thermique.

Les figures 1 et 2 représentent des schémas de fonctionnement connus (US-A-2 290 532) d'un cycle à absorption.

Les figures 3 et 4 représentent deux modes de réalisation de l'invention.

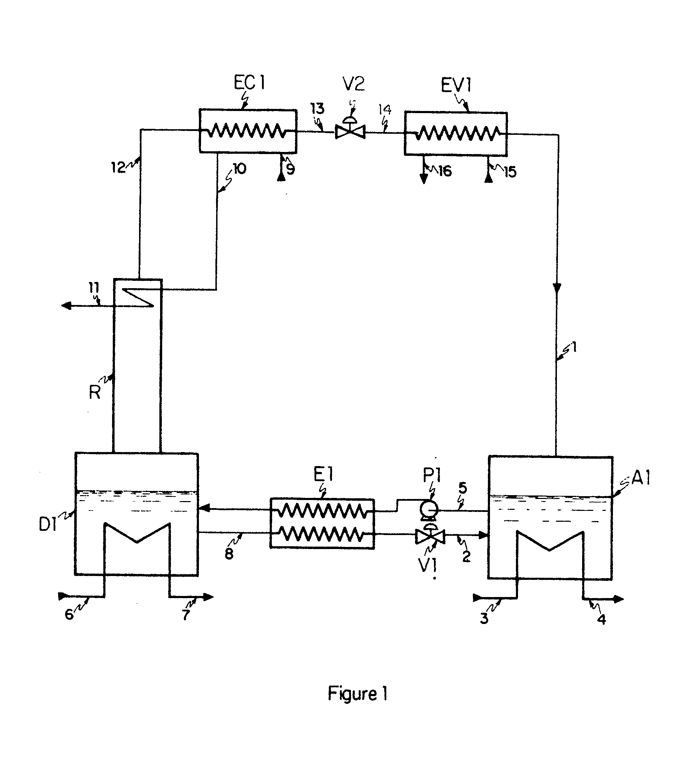

Dans le schéma de la figure 1, illustrant l'état de la technique, le fluide de travail (F) qui arrive en phase gazeuse par le conduit 1 est absorbé par une phase solvant (S) qui arrive par le conduit 2 dans la zone d'absorption A1, la chaleur d'absorption étant transmise à un fluide extérieur qui arrive par le conduit 3 et repart par le conduit 4. La solution ainsi formée est évacuée par le conduit 5 et envoyée par la pompe P1 à travers l'échangeur E1. A la sortie de l'échangeur E1 cette solution est envoyée dans la zone de désorption D1 dans laquelle on génère à nouveau une phase vapeur riche en fluide de travail (F), la chaleur de désorption étant fournie par un fluide extérieur qui arrive par le conduit 6 et repart par le conduit 7. La solution pauvre obtenue est envoyée par la conduite 8 dans l'échangeur E1 puis détendue à travers la vanne de détente V1 et envoyée par le conduit 2 dans la zone d'absorption A1. La phase vapeur obtenue est rectifiée dans la zone des rectification R pour éliminer de cette phase vapeur le solvant entrainé. Dans certains cas, comme par exemple dans le cas du couple eau-bromure de lithium, il n'y a pas de solvant entrainé et on n'utilise pas de zone de rectification. La zone de rectification R est refroidie en tête par un fluide extérieur qui arrive par le conduit 10 et repart par le conduit 11. La phase vapeur rectifiée ressort par le conduit 12. Elle est alors condensée dans l'échangeur EC1 qui est refroidi par un fluide extérieur qui arrive par le conduit 9 et repart par le conduit 10. La phase liquide obtenue est envoyée par le conduit 13 à la vanne de détente V2 d'où elle ressort par le conduit 14. La phase liquide détendue ainsi obtenue est vaporisée dans l'échangeur EV1 en prélevant de la chaleur sur un fluide extérieur qui arrive par le conduit 15 et ressort par le conduit 16. On obtient ainsi la phase vapeur qui est recyclée par le conduit 1 à la zone d'absorption. Dans un tel procédé la succession des étapes d'absorption et de désorption permet de comprimer le fluide de travail en phase vapeur depuis une basse pression voisine de la pression régnant dans l'évaporateur EV1 jusqu'à une haute pression voisine de la pression régnant dans le condenseur EC1.

Ce procédé connu met en œuvre une étape d'absorption dans une phase solvant liquide suivie d'une étape de désorption opérée à plus haute pression et plus haute température.

Le dioxyde de carbone est un fluide très courant et qui présente de nombreux avantages, notamment un faible prix de revient et une grande sécurité d'emploi. Il est toutefois pratiquement impossible de l'utiliser dans un cycle à absorption tel que celui qui est schématisé sur la figure 1. En effet sa température critique est de 31°C et sa pression critique de 73,8 bars. Ces propriétés sont pratiquement incompatibles avec les niveaux de température et de pression qui sont requis dans le condenseur d'une pompe à chaleur ou même d'une installation frigorifique.

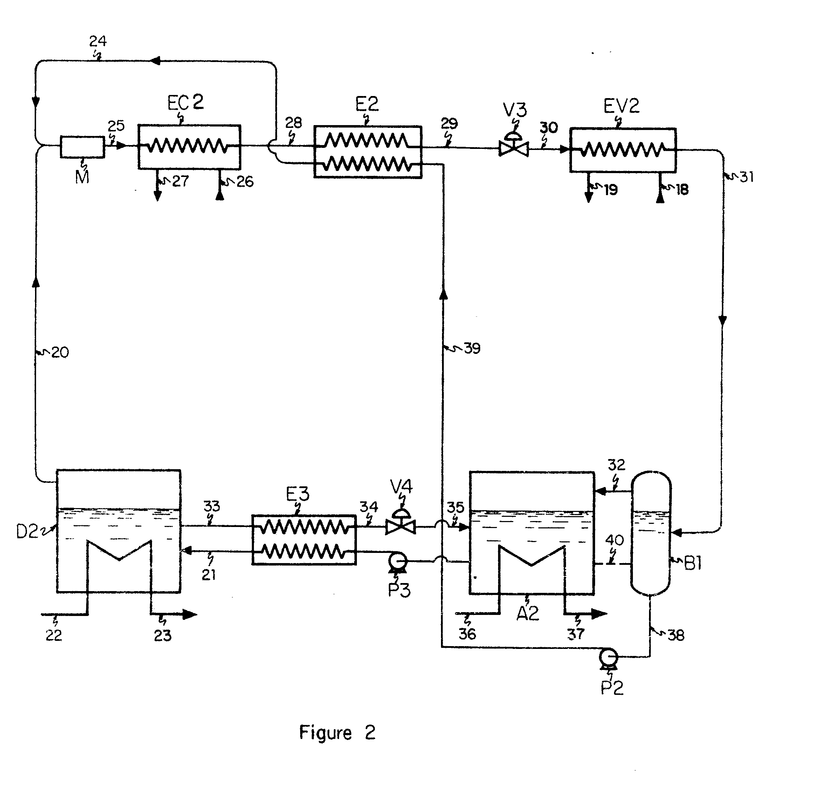

La figure 2 illustre un autre mode de fonctionnement connu (US-A-2 290 532) constituant un perfectionnement au mode de fonctionnement de la figure 1 et qui permet une utilisation plus aisée du dioxyde de carbone.

La solution de dioxyde de carbone provenant de l'absorbeur A2 est envoyée par la pompe P3, l'échangeur E3 et le conduit 21 dans la zone de désorption D2 dans laquelle elle est chauffée par un fluide extérieur qui arrive par le conduit 22 et repart par le conduit 23. La solution appauvrie en dioxyde de carbone obtenue est envoyée par le conduit 33 à l'échangeur E3 d'où elle ressort par le conduit 34, est détendue à travers la vanne de détente V4 et envoyée par le conduit 35 à la zone d'absorption A2. La phase gazeuse obtenue sort de la zone de désorption D2 par le conduit 20. Elle est alors mélangée avec une phase solvant arrivant par le conduit 24, le mélange liquide-vapeur ainsi obtenu pouvant utilement passer dans la zone de mélange M pour parfaire l'homogénéisation puis étant envoyé par le conduit 25 dans l'échangeur EC2. Dans l'échangeur EC2 le dioxyde de carbone est absorbé dans la phase solvant, la chaleur dégagée étant transmise à un fluide extérieur qui arrive par le conduit 26 et repart par le conduit 27. La solution ainsi obtenue est envoyée par le conduit 28 à l'échangeur E2 d'où elle ressort par le conduit 29. Elle est alors détendue à travers la vanne de détente V3 d'où elle ressort par le conduit 30 pour être envoyée dans l'échangeur EV2. Dans l'échangeur EV2 une phase gazeuse de dioxyde de carbone est générée à nouveau, la chaleur nécessaire étant prélevée sur un fluide extérieur qui arrive par le conduit 18 et repart par le conduit 19. Le mélange liquide-gaz ainsi obtenu est envoyé par le conduit 31 au bac de décantation B1. Dans ce bac de décantation B1 la phase gazeuse et la phase liquide sont séparées. La phase gazeuse est envoyée par le conduit 32 dans la zone d'absorption A2 dans laquelle elle est absorbée par la phase solvant arrivant par le conduit 35, la chaleur d'absorption étant transmise à un fluide extérieur qui arrive par le conduit 36 et repart par le conduit 37. La phase liquide est prélevée à travers le conduit 38 par la pompe P2 qui l'envoie par le conduit 39 à l'échangeur E2 d'où elle ressort par le conduit 24. Le cycle ainsi décrit comprend donc deux circuits de circulation de phase solvant. Le conduit 40 a pour but de maintenir sensiblement constantes les quantités de solvant contenues dans ces deux circuits et ceci est réalisé par exemple comme l'indique le schéma de la figure 2 en maintenant par un équilibre hydrostatique les niveaux en A2 et B1 à la même hauteur.

Les échangeurs E2 et E3 permettent de réchauffer les phases liquides qui sont envoyées respectivement au condenseur EC2 et à la zone de désorption D2 en récupérant de la chaleur sur les phases liquides qui sortent respectivement du condenseur EC2 et de la zone de désorption D2.

Ainsi, en cas de fonctionnement en pompe à chaleur selon le schéma précité, de la chaleur à haut niveau thermique est fournie au générateur D2 et de la chaleur à bas niveau (par exemple air ou eau extérieurs) au désorbeur EV2. On recueille de la chaleur utile à un niveau thermique intermédiaire entre ceux des absorbeurs A2 et EC2.

En cas de fonctionnement en réfrigération, la source froide est constituée par l'évaporateur EV2.

Selon une autre proposition (US-A-3 124 939), le dioxyde de carbone est généré par une solution aqueuse de bicarbonate de sodium. La solution résultant de carbonate de sodium est utilisée ensuite pour réabsorber le dioxyde de carbone après que celui-ci ait subi les étapes classiques de condensation et de vaporisation.

Il a été découvert, et c'est là l'objet de la présente invention, que contrairement à ce que les observations précédentes laissent supposer, il est possible de mettre en œuvre avantageusement le dioxyde de carbone à condition d'opérer selon le procédé de l'invention.

L'avantage essentiel du procédé de l'invention est de permettre une économie de l'énergie nécessaire à la désorption, grâce à l'utilisation d'une partie de la chaleur d'absorption.

Le procédé selon l'invention est caractérisé en ce que

a) on soumet une solution $L_1$ de dioxyde de carbone dans une phase liquide de solvant du dioxyde de carbone à un chauffage, dans des conditions de désorption au moins partielle de dioxyde de carbone, de manière à former une phase gazeuse $G_1$ du dioxyde de carbone et une phase liquide désorbée $S_1$, et on sépare la phase gazeuse $G_1$ de la phase liquide $S_1$,

b) on mélange la phase gazeuse $G_1$ avec une phase liquide $S_2$, solvant du dioxyde de carbone et on évacue lachaleur dégagée de manière à dissoudre au moins une partie de la phase gazeuse $G_1$ dans la phase liquide de solvant $S_2$ et à obtenir une solution $L_2$ de dioxyde de carbone dans la phase liquide solvant $S_2$,

c) on abaisse la pression de la solution $L_2$ et on fournit de la chaleur à cette solution, dans des conditions de désorption au moins partielle du dioxyde de carbone, de manière à former une phase gazeuse $G_2$ de dioxyde de carbone et une phase liquide désorbée $S_3$ et on sépare la phase $G_2$ de la phase $S_3$,

d) on abaisse la pression de la phase liquide désorbée $S_1$ pour l'amener sensiblement au niveau de la pression de la phase $G_2$, on mélange la phase $S_1$ avec la phase $G_2$ de manière à obtenir une solution $L_3$ de la phase $G_2$ dans la phase $S_1$, et on évacue de la solution $L_3$, la chaleur dégagée par l'absorption de la phase $G_2$ dans la phase $S_1$, de manière à abaisser la température de ladite solution $L_3$, ladite chaleur étant cédée, dans l'ordre, pour partie à la solution $L_3$ recomprimée, comme indiqué à l'étape (e), puis, pour le reste, au milieu extérieur,

e) on élève le niveau de pression de la solution $L_3$ issue de l'étape (d) pour l'amener sensiblement au niveau de la pression de la solution $L_1$, on chauffe la solution $L_3$ recomprimée au moyen d'une partie de la chaleur d'absorption cédée par la solution $L_3$, comme indiqué à l'étape d, et on renvoie ensuite la solution $L_3$ recomprimée et chauffée à l'étape (a) pour y reconstituer la solution $L_1$, et

f) on élève le niveau de pression de la phase liquide désorbée $S_3$ pour l'amener sensiblement au niveau de pression de la phase gazeuse $G_1$ et on renvoie ensuite une partie au moins de la phase liquide $S_3$ recomprimée à l'étape (b) pour y reconstituer une partie au moins de la phase liquide $S_2$.

Selon une forme de réalisation préférée, on soumet la solution L2 provenant de l'étape (b), avant de la soumettre à l'étape (c) à un échange de chaleur avec la phase liquide S3.

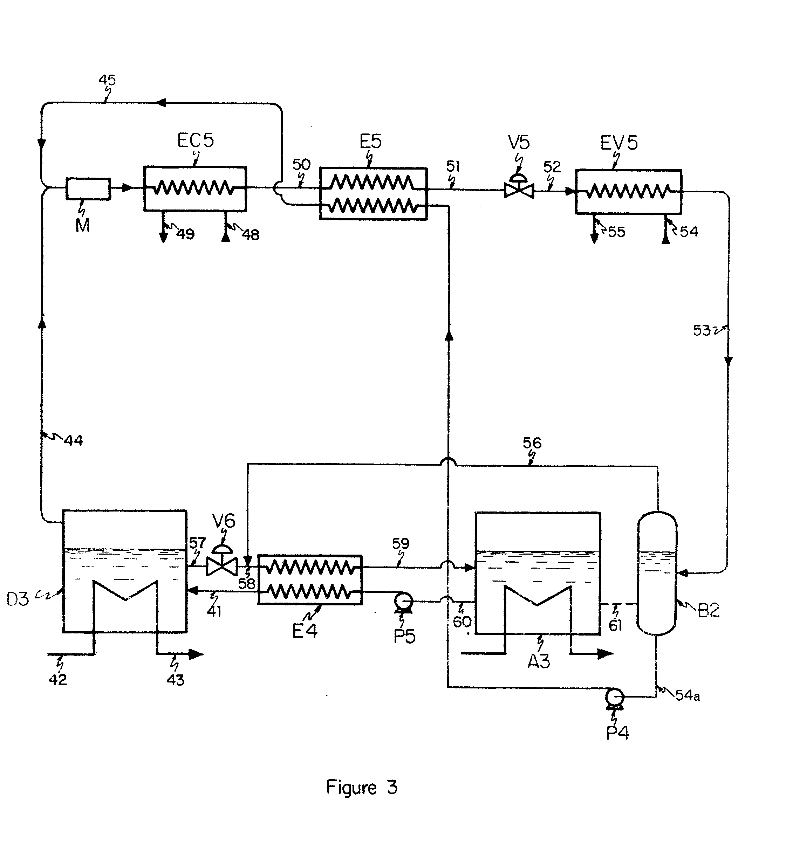

La figure 3 représente un premier mode de mise en œuvre de l'invention.

La phase gazeuse obtenue dans la zone de désorption D3 sort par la conduite 44. Elle est mélangée avec une phase solvant arrivant par le conduit 45. Le mélange liquide vapeur est homogénéisé dans la zone de mélange M puis ressort par la conduite 47 pour traverser l'échangeur EC5.

Dans cet échangeur le dioxyde de carbone est absorbé dans la phase solvant en cédant de la chaleur transmise à un fluide extérieur qui arrive par le conduit 48 et ressort par le conduit 49. Par le conduit 50 la solution est envoyée à l'échangeur E5 d'où elle ressort par la canalisation 51 après avoir cédé de la chaleur au liquide pompé par P4 et retournant au mélangeur; elle est ensuite détendue dans la vanne V5 et envoyée par le conduit 52 dans l'échangeur EV5. Dans l'échangeur EV5 le dioxyde de carbone gazeux se sépare de la solution, un fluide extérieur arrivant par le conduit 54 et sortant par le conduit 55 apportant la chaleur nécessaire à la désorption. Le mélange liquide-gaz ainsi généré est envoyé par la canalisation 53 à la zone de décantation B2 où les deux phases sont séparées. La phase liquide est prélevée par le conduit 54 a et la pompe P4 pour être introduite dans l'échangeur E5 d'où elle ressort par la conduite 45.

La phase gazeuse issue du bac de décantation B2 est envoyée par la conduite 56 dans la conduite 58 où elle est mélangée à la phase liquide pauvre en soluté venant par la canalisation 57 et la vanne de détente V6 de la zone de désorption D3.

Le mélange des deux phases gazeuse et liquide est envoyé dans l'échangeur E4, où une fraction de la phase gazeuse est absorbée par la phase liquide, ressort par la canalisation 59 et aboutit à la zone d'absorption A3 où, pratiquement toute la phase gazeuse est absorbée par le solvant.

La phase liquide qui ressort de l'absorbeur A3 par la canalisation 60, est pompée par P5 et envoyée dans E4.

Dans l'échangeur E4 la chaleur fournie par l'absorption de la phase gazeuse dans la phase liquide pauvre en soluté est utilisée pour réchauffer la solution venant de P5 et générer une fraction de phase gazeuse de dioxyde de carbone. Cette fraction gazeuse et le liquide résiduel sont envoyés au désorbeur D3 par la conduite 41.

La canalisation 61 entre la zone de décantation B2 et la zone d'absorption A3 a la même rôle de maintien des quantités de solvant contenues dans les deux circuits.

En se référant de nouveau à la figure 2.

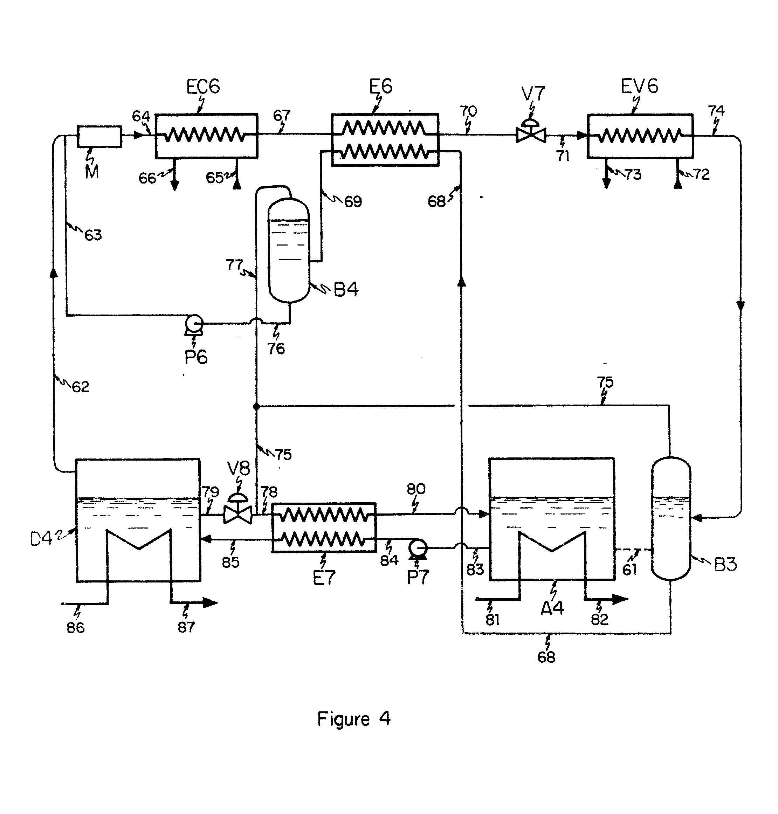

Il peut être également avantageux, afin de réduire la pression régnant dans l'échangeur EC2, de poursuivre l'absorption du dioxyde de carbone dans la phase solvant au cours de l'échange opéré dans l'échangeur E2, la chaleur dégagée étant transmise à la solution qui est réchauffée au cours de l'échange opéré dans l'échangeur E2 en conduisant à un dégagement de dioxyde de carbone gazeux. On peut réaliser un tel agencement en opérant selon le schéma représenté sur la figure 4.

La phase gazeuse, riche en dioxyde de carbone, générée dans la zone de désorption D4 est évacuée par le conduit 62 dans le mélangeur M où elle est mise en contact avec la phase liquide pauvre en dioxyde de carbone arrivant par la conduite 63.

Ressortant du mélangeur M par le conduit 64, le mélange entre dans l'échangeur EC6 où se produit une absorption partielle de la phase gazeuse de dioxyde de carbone dans la solution de solvant, la chaleur dégagée par cette absorption étant cédée à un fluide extérieur entrant par le conduit 65 et sortant par le conduit 66.

Sortant de l'échangeur EC6 par le conduit 67, le mélange poursuit dans l'échangeur E6 l'absorption de la phase gazeuse dans le solvant, cédant ainsi de la chaleur à la phase liquide provenant, par la conduite 68, du bac de décantation B3.

Par la conduite 70, il sort de l'échangeur E6 une phase liquide riche en soluté qui est détendue par la vanne V7, et est introduite par le conduit 71 dans l'échangeur EV6. Un apport de chaleur par un fluide extérieur entrant par la conduite 72 et sortant par la conduite 73 permet la désorption partielle d'une phase gazeuse riche en dioxyde de carbone évacuée avec la phase liquide, par la conduite 74, vers le bac de décantation B3.

La phase liquide, issue de ce bac de décantation B3, est amenée par la conduite 68 à l'échangeur E6 pour y être réchauffée et générer ainsi une phase gazeuse riche en dioxyde de carbone évacuée avec la phase liquide, par le conduit 69, vers le bac de décantation B4.

Dans ce bac de décantation B4, la phase liquide pauvre en soluté est extraite par la conduite 76 puis introduite par la pompe P6 et la canalisation 63 dans le mélangeur M.

La phase gazeuse riche en dioxyde de carbone issue de B4 par la conduite 77, ainsi que la phase gazeuse issue de B3 par la conduite 75 sont mélangées dans la canalisation 78 avec la phase liquide provenant de la zone de désorption D4 par la conduite 79 et de la détente V8.

Les phases gazeuse et liquide de la canalisation 78, cèdent dans l'échangeur E7, de la chaleur provenant en partie de l'éxothermicité de l'absorption de la phase gazeuse par la phase liquide. Il ressort de l'échangeur E7 un mélange de gaz et de liquide qui est conduit, par la canalisation 80, dans la zone d'absorption A4 où l'absorption se poursuit en cédant de la chaleur à un fluide extérieur entrant par la canalisation 81 et sortant par la canalisation 82.

La phase liquide, riche en soluté, sortant de la zone d'absorption A4 par le conduit 83 est introduite par la pompe P7 et le conduit 84 dans l'échangeur E7.

Une fraction du dioxyde de carbone, contenue dans cette phase liquide, est vaporisée dans l'échangeur E7 par l'apport de chaleur décrit auparavant et provenant de l'absorption partielle de la phase vapeur dans la phase liquide introduite par la conduite 78.

Le mélange de gaz et de liquide sortant de l'échangeur E7 est transféré par le conduit 85 dans la zone de désorption D4 où la désorption est poursuivie par l'apport de chaleur d'un fluide extérieur entrant par le conduit 86 et sortant par le conduit 87.

Les solvants utilisés dans les absorbeurs (A2) et (EC2) peuvent être de même nature ou être différents. Tout liquide capable de dissoudre le dioxyde de carbone réversiblement (c'est-à-dire capable de libérer le dioxyde de carbone par chauffage subséquent de la solution) peut être utilisé, quel que soit le type l'absorption, physique ou chimique.

Sous cette réserve de réversibilité, les solvants peuvent appartenir à une famille chimique quelconque, et par exemple à celle des amines, des amides, des cétones, des esters carboxyliques, des alcools, des glycols, des éthers, des nitriles, des sulfones, des sulfoxydes ou des esters phosphoriques.

Une famille préférée est celle des amines, en particulier celle des alkylamines, arylamines, amines cycliques et alcanolamines, utilisées de préférence en solution aqueuse. Des exemples sont les solutions aqueuses de monoéthanolamine, de diéthanolamine, de triéthanolamine, de diisopropanolamine, de méthyldiéthanolamine ou de (amino-2 éthyl) (hydroxy-2 éthyl) éther connu commercialement sous le nom de Diglycolamine (DGA), d'isopropylamine, de diéthylènetriamine, de morpholine ou d'éthylènediamine.

D'autres exemples de solvants sont le diméthylsulfoxyde, le diéthylène glycol, la N méthyl pyrrolidone, le tri-n-butyl phosphate, le sulfolane, le carbonate de propylène, le triacétate de glycérol, l'acétate de méthoxy diéthylène glycol, le diméthyléther du polyéthylène glycol, le méthanol, le cyanoacétate de méthyle, le glutaronitrile, le diméthylformamide, et les méthyl isopropyl éthers d'oligoéthyleneglycol.

On peut également utiliser un mélange d'amine avec un solvant d'une autre des familles mentionnées ci-dessus, avec ou sans eau, par exemple un mélange d'éthylène glycol avec de l'eau et de la diéthanolamine.

L'invention est illustrée par les exemples 1 et 2.

### Exemple 1

L'exemple 1 est décrit en référence au schéma de la figure 3. Dans cet exemple le fluide est le dioxyde de carbone, le solvant une solution aqueuse à 60% en poids de (amino-2 éthyl) (hydroxy-2 éthyl) ether (DGA) connu sous le nom commercial de diglycolamine (marque déposée).

On fait arriver par le conduit 41 dans la zone de désorption 394 l/h de solution aqueuse de dioxyde de carbone dans le solvant précité, dont le rapport molaire (nombre de moles de $CO_2$ dissous par rapport au nombre de moles de DGA) est de 0,33, ainsi que 382 moles/h de dioxyde de carbone.

L'ensemble est chauffé avec une puissance de 10 kW par un fluide extérieur jusqu'à 180°C. La phase gazeuse ainsi formée, qui représente 675 moles/h de dioxyde de carbone est évacuée par le conduit 44. La phase liquide retourne à la vanne de détente V6. Après mélange de dioxyde de carbone la phase liquide cède dans l'échangeur E4 de la chaleur provenant de sa température élevée et de l'absorption partielle du dioxyde de carbone. L'absorption se poursuit dans la zone A3 entre 75°C et 53°C température du liquide évacué par le conduit 60. Un fluide extérieur récupère la chaleur dégagée dans la zone d'absorption A3. Une pompe P5 assure le retour de la solution aqueuse de DGA dont le rapport molaire en $CO_2$ n'est plus que 0,2 et lui fait traverser l'échangeur E4 ou elle est partiellement désorbée, la température étant portée à près de 170°C.

La phase gazeuse générée à 180°C dans la zone de désorption D3 est mélangée à une phase aqueuse de DGA de rapport molaire en dioxyde de carbone voisin de 0,64 et dont la température est proche de 35°C.

Dans l'échangeur EC5 le dioxyde de carbone est de nouveau absorbé par cette phase liquide dont la température s'élève et qui cède la chaleur à un fluide extérieur.

Evacuée à 40°C la phase liquide, de débit 909 l/h, ayant absorbé le dioxyde de carbone présent et dont le rapport molaire en dioyde de carbone s'élève à 0,77, cède dans l'échangeur E5 la chaleur correspondante à l'abaissement de température de 40°C à 5°C, et est détendue de 30 bar à 1,2 bar (absolu) par la vanne V5.

Un fluide extérieur évite par un apport thermique de 5,15 kW à la solution de DGA de voir sa température descendre trop fortement.

Sortant à 0°C, une phase gazeuse et une phase liquide dont le rapport molaire en $CO_2$ est redescendu à 0,64, se séparent dans le bac de décantation B2.

La phase gazeuse est introduite dans le conduit 58 où circule l'amine à faible teneur en dioxyde de carbone.

La phase liquide est extraite du bac de décantation B2 et réinjectée par la pompe P4 dans l'échangeur E5 où elle est réchauffée de 0°C à 35°C avant son introduction dans le mélangeur M.

Dans cet exemple et avec une chaleur de désorption et de dissolution de 78 kJ/mole de dioxyde de carbone pour les solutions pauvres et de 50 kJ/mole de dioxyde de carbone pour les solutions riches on trouve que l'on prélève 5,15 kW au fluide extérieur si l'apport thermique est de 10 kW. Le coefficient de performance du système qui fonctionne dans cet exemple comme une pompe à chaleur est de 1,51.

### Exemple 2

L'exemple 2 est décrit en référence au schéma de la figure 4. Dans cet exemple le fluide de travail est le dioxyde de carbone, le solvant une solution aqueuse concentrée de diethanolamine (DEA) 8 fois normale (8N).

On fait arriver à une température proche de 150°C, par la canalisation 85 et dans la zone de désorption D4, une phase liquide constituée par une solution aqueuse de diéthanolamine (débit 383 l/h) dont la teneur en dioxyde de carbone est mesurée par son rapport molaire en $CO_2$ de 0,15 (nombre de moles de $CO_2$ par rapport au nombre de moles de DEA) et une phase gazeuse constituée essentiellement par du dioxyde de carbone (débit 1072 moles/h). Un fluide extérieur fait un apport thermique (10 kW) au mélange des phases qu'il porte à 160°C. Il s'ensuit une désorption accrue de la phase liquide dont le rapport molaire en $CO_2$ à cette température (à la pression de travail choisie de 20 bar) s'abaisse à 0,06.

Evacué, détendu à 2 bar par la vanne V8, le liquide reçoit dans le conduit 78 une certaine quantité de dioxyde de carbone qui va être absorbé partiellement par le liquide dans l'échangeur E7 avec l'abaissement de température du liquide de 160°C à 65°C.

L'absorption se termine dans le bac d'absorption A4 en cédant de la chaleur jusqu'à un niveau de température de 55°C à un fluide extérieur.

La phase liquide ainsi refroidie à 55°C, s'enrichit en dioxyde de carbone jusqu'à un rapport molaire de 0,5.

La pompe P7 assure le retour de cette phase liquide à l'échangeur E7 où, recevant la chaleur dégagée par l'absorption partielle déjà décrite, la phase liquide va, en s'échauffant jusqu'à 150°C, libérer une fraction du dioxyde de carbone qu'elle contient. On retrouve ainsi l'introduction, dans la zone de désorption, du mélange de phases décrit auparavant.

On trouve que l'apport thermique de 10 kW est associé à un dégagement de dioxyde de carbone d'un débit de 1348 moles/h à 160°C et sous une pression absolue de 20 bars.

La phase gazeuse issue de D4 va être de nouveau absorbée, après le mélangeur M, par une solution aqueuse de DEA, amenée sous 20 bars par la conduite 63, possédant une température de 35°C, un rapport molaire de 0,575 et un débit de 661 l/h. Dans de telles conditions le dioxyde de carbone est partiellement absorbé en cédant de la chaleur à un fluide extérieur dans l'échangeur EC6. En limitant la température à 40°C en sortie de cet échangeur, l'absorption se poursuit dans l'échangeur E6 jusqu'à une température de sortie de 5°C.

Après détente dans la vanne V7, le liquide va désorber de nouveau la phase gazeuse si on lui apporte, par un fluide extérieur, une chaleur à bas niveau thermique, limitant la température de sortie à 0°C.

Après décantation dans le bac B3, la phase liquide de rapport molaire 0,675 est introduite de nouveau dans l'échangeur E6 où par l'apport thermique qui s'y déroule jusqu'à 35°C, une fraction du dioxyde de carbone est de nouveau désorbée. Le mélange qui en résulte, est décanté dans le pot B4. Le liquide, de rapport molaire 0,575, est réintroduit par la pompe P6 dans le mélangeur M.

Les phases gazeuses de dioxyde de carbone récupérées dans les bacs de décantation B3 et B4 sont réinjectées dans la solution provenant, après détente en V8, de la zone chaude de désorption D4.

Avec les valeurs de débit, pression et température de cet exemple 2 et avec des chaleurs de dissolution ou de désorption de 90 kJ/mole de $CO_2$ ou 50 kJ/mole de $CO_2$ selon la richesse de la solution, on trouve que, au niveau de l'échangeur EV6, 8,7 kW thermique sont reçus du fluide extérieur.

On obtient donc un coefficient de performance pour un tel système fonctionnant en pompe à chaleur, s'élevant à 1,87.

Les conditions de fonctionnement, présentées dans les exemples, ne doivent pas être considérées comme limitatives.

Différentes variantes peuvent être envisagées dans l'agencement, sans modifier le principe du procédé selon l'invention.

Le procédé peut être conçu à des échelles de puissance très variables, allant par exemple pour la puissance mesurée au point le plus froid (basse température) de quelques centaines de watts à quelques mégawatts.

Des équipements très divers peuvent donc être utilisés pour réaliser le procédé.

Les échangeurs peuvent être par exemple des échangeurs à tubes et calandre ou des échangeurs à plaques.

Les étapes d'absorption et de désorption sont menées de préférence dans des colonnes de type de celles qui sont le plus fréquemment utilisées en génie chimique pour mener ce genre d'opérations, comportant des plateaux ou des garnissages.

Dans une installation de pompe à chaleur il peut être avantageux de mettre en série les conduites 36, 37, 26 et 27 en y faisant circuler le fluide extérieur à réchauffer.

La température d'évaporation du fluide de travail (dioxyde de carbone) peut se situer par exemple dans une gamme de travail allant de −60°C à +130°C.

Les températures d'absorption peuvent se situer par exemple dans une gamme de température allant de +10°C à +120°C.

La température de chauffage du générateur de la zone de désorption peut se situer par exemple dans une gamme de température allant de +100°C à 250°C.

Il est clair que les températures adoptées sont fonction du solvant choisi et des niveaux de température auxquels on désire fournir et recevoir de la chaleur.

Différentes conditions opératoires peuvent être obtenues en faisant varier les concentrations en dioxyde de carbone dans la phase solvant.

En particulier si la concentration en dioxyde de carbone est plus faible dans la solution $L_2$ que dans la solution $L_1$, le système fonctionne en »thermotransformateur«, c'est-à-dire qu'il fournit au cours de l'étape (b) de la chaleur à plus haut niveau thermique que la chaleur prélevée au cours de l'étape (a). Il permet ainsi de transformer une partie de la chaleur à niveau thermique intermédiaire, prélevée au cours des étapes (a) et (c), en chaleur produite à plus haut niveau thermique au cours de l'étape (b), la chaleur restante, produite au cours de l'étape (d), étant cédée à bas niveau thermique.

La pression maximum de fonctionnement du dispositif est en général inférieure à 50 bars. Il convient toutefois de noter que les étapes de désorption (a) et d'absorption (b) sont mises en œuvre à des niveaux de pression identiques ou assez voisins, supérieurs à ceux des étapes de désorption (c) et d'absorption (d) qui opèrent elles-mêmes sensiblement au même niveau de pression.

Il n'est pas nécessaire que le dioxyde de carbone soit pur; on peut même opérer avec des fluides mixtes dont l'un des composants est le dioxyde de carbone, en particulier quand les autres composants peuvent eux-mêmes se dissoudre dans le solvant choisi et en être libérés dans les mêmes conditions que celles applicable au dioxyde de carbone.

## Revendications

1. Procédé de production de froid et/ou de chaleur mettant en œuvre un cycle à absorption, caractérisé en ce que

a) on soumet une solution $L_1$ de dioxyde de carbone dans une phase liquide de solvant du dioxyde de carbone à un chauffage, dans des conditions de désorption au moins partielle de dioxyde de carbone, de manière à former une phase gazeuse $G_1$ du dioxyde de carbone et une phase liquide désorbée $S_1$, et on sépare la phase gazeuse $G_1$ de la phase liquide $S_1$,

b) on mélange la phase gazeuse $G_1$ avec une phase liquide $S_2$, solvant du dioxyde de carbone et on évacue la chaleur dégagée de manière à dissoudre au moins une partie de la phase gazeuse $G_1$ dans la phase liquide de solvant $S_2$ et à obtenir une solution $L_2$ de dioxyde de carbone dans la phase liquide solvant $S_2$,

c) on abaisse la pression de la solution $L_2$ et on fournit de la chaleur à cette solution, dans des conditions de désorption au moins partielle du dioxyde de carbone, de manière à former une phase gazeuse $G_2$ de dioxyde de carbone et une phase liquide désorbée $S_3$ et on sépare la phase $G_2$ de la phase $S_3$,

d) on abaisse la pression de la phase liquide désorbée $S_1$ pour l'amener sensiblement au niveau de la pression de la phase $G_2$, on mélange la phase $S_1$ avec la phase $G_2$ de manière à obtenir une solution $L_3$ de la phase $G_2$ dans la phase $S_1$, et on évacue de la solution $L_3$, la chaleur dégagée par l'absorption de la phase $G_2$ dans la phase $S_1$, de

manière à abaisser la température de ladite solution $L_3$, ladite chaleur étant cédée, dans l'ordre, pour partie à la solution $L_3$ recomprimée, comme indiqué à l'étape (e), puis, pour le reste, au milieu extérieur,

e) on élève le niveau de pression de la solution $L_3$ issue de l'étape (d) pour l'amener sensiblement au niveau de la pression de la solution $L_1$, on chauffe la solution $L_3$ recomprimée au moyen d'une partie de la chaleur d'absorption cédée par la solution $L_3$, comme indiqué à l'étape (d), et on renvoie ensuite la solution $L_3$ recomprimée et chauffée à l'étape (a) pour y reconstituer la solution $L_1$, et

f) on élève le niveau de pression de la phase liquide désorbée $S_3$ pour l'amener sensiblement au niveau de pression de la phase gazeuse $G_1$ et on renvoie ensuite une partie au moins de la phase liquide $S_3$ recomprimée à l'étape (b) pour y reconstituer une partie au moins de la phase liquide $S_2$.

2. Procédé selon la revendication 1, dans lequel on soumet la solution $L_2$ provenant de l'étape (b), avant de la soumettre à l'étape (c), à un échange de chaleur avec la phase liquide $S_3$.

3. Procédé selon la revendication 1 ou 2 dans lequel le même composé chimique est utilisé pour constituer les phases liquides solvant du dioxyde de carbone utilisées à l'étape (a) et à l'étape (b).

4. Procédé selon l'une quelconque des revendications 1 à 3 dans lequel on met en communication directe la solution $L_3$ de l'étape (d) avec la phase liquide désorbée $S_3$ de l'étape (c) de manière à maintenir sensiblement constants les niveaux de la solution $L_3$ et la phase liquide $S_3$.

5. Procédé selon l'une quelconque des revendications 1 à 4 dans lequel on soumet la solution $L_2$, avant de la soumettre à l'étape (c), à un échange de chaleur avec la phase liquide $S_3$, le dit échange étant effectué avant que la phase liquide $S_3$ ait subi l'élévation de niveau de pression de l'étape (f), le dit échange de chaleur provoquant la formation d'une phase gazeuse $G_3$ de dioxyde de carbone à partir de la phase liquide $S_3$, et dans lequel on sépare la dite phase gazeuse $G_3$ de la phase liquide résiduelle $S_3$ et on mélange la phase gazeuse $G_3$ ainsi séparée avec la phase liquide $S_1$ ayant subi l'abaissement de pression de l'étape (d), on cède de la chaleur d'absorption résultante à la solution $L_3$ après élévation du niveau de pression de celle-ci et on fait ensuite subir à la phase liquide résiduelle $S_3$ l'élévation de niveau de pression de l'étape (f).

6. Procédé selon l'une quelconque des revendications 1 à 5, dans lequel le solvant du dioxyde de carbone est une amine.

## Patentansprüche

1. Verfahren zur Gewinnung von Kälte und/oder Wärme unter Einsatz eines Absorptionszyklus, dadurch gekennzeichnet, daß man

a) eine Lösung $L_1$ Kohlenmonoxid in einer flüssigen Phase eines Lösungsmittels für Kohlendioxid erwärmt, und zwar unter den Bedingungen einer mindestens partiellen Desorption des Kohlendioxids, so daß sich eine Gasphase $G_1$ von Kohlendioxid und eine desorbierte flüssige Phase $S_1$ bildet, worauf man die Gasphase $G_1$ und flüssige Phase $S_1$ trennt,

b) die Gasphase $G_1$ mit einer flüssigen Phase $S_2$ eines Lösungsmittels für Kohlendioxid mischt und die freigesetzte Wärme so abführt, daß mindestens ein Teil der Gasphase $G_1$ in der flüssigen Phase des Lösungsmittels $S_2$ sich auflöst und man eine Lösung $L_2$ von Kohlendioxid in der flüssigen Phase des Lösungsmittels $S_2$ erhält,

c) den Druck der Lösung $L_2$ senkt und diese Lösung unter den Bedingungen einer mindestens partiellen Desorption des Kohlendioxids erwärmt, so daß sich eine Gasphase $G_2$ von Kohlendioxid und eine desorbierte flüssige Phase $S_3$ bildet, worauf man die Phase $G_2$ von der Phase $S_3$ trennt,

d) den Druck der desorbierten flüssigen Phase $S_1$ senkt, um ihn im wesentlichen auf das Druckniveau der Phase $G_2$ zu bringen, die Phase $S_1$ mit der Phase $G_2$ mischt, so daß man eine Lösung $L_3$ der Phase $G_2$ in der Phase $S_1$ erhält, und von der Lösung $L_3$ die freigesetzte Wärme durch Absorption der Phase $G_2$ in der Phase $S_1$ abzieht, so daß die Temperatur dieser Lösung $L_3$ gesenkt wird, wobei diese Wärme der Reihe nach zum Teil an die rekomprimierte Lösung $L_3$ (wie in Stufe e) angegeben) sowie beim Rest an Außenmilieu abgegeben wird,

e) das Druckniveau der Lösung $L_3$ aus Stufe d) anhebt, so daß es im wesentlichen das Druckniveau der Lösung $L_1$ erreicht, die rekomprimierte Lösung $L_3$ mittels eines Teils der durch die Lösung $L_3$ freigesetzten Absorptionswärme erhitzt (wie angegeben in Stufe d) und anschließend die rekomprimierte und erhitzte Lösung $L_3$ in die Stufe a) zurückleitet, wo sie die Lösung $L_1$ wieder herstellt und

f) das Druckniveau der desorbierten flüssigen Phase $S_3$ anhebt, so daß es im wesentlichen das Druckniveau der Gasphase $G_1$ erreicht, und anschließend mindestens einen Teil der rekomprimierten flüssigen Phase $S_3$ wieder in die Stufe b) zurückschickt, wo sie mindestens einen Teil der flüssigen Phase $S_2$ wieder herstellt.

2. Verfahren gemäß Anspruch 1, dadurch gekennzeichnet, daß man die aus Stufe b) kommende Lösung $L_2$, bevor man sie der Stufe c) unterwirft, einem Wärmeaustausch mit der flüssigen Phase $S_3$ zuführt.

3. Verfahren nach Ansprüchen 1 und 2, dadurch gekennzeichnet, daß die gleiche chemische Verbindung verwendet wird, um die flüssigen Lösungsmittelphasen des Kohlendioxids in Stufe a) und Stufe b) zu bilden.

4. Verfahren gemäß Ansprüchen 1 bis 3, dadurch gekennzeichnet, daß man die Lösung $L_3$ der Stufe d) direkt in Verbindung bringt mit der desorbierten flüssigen Phase $S_3$ der Stufe c), so daß man praktisch konstante Niveaus der Lösung $L_3$ und der flüssigen Phase $S_3$ erhält.

5. Verfahren gemäß Ansprüchen 1 bis 4, dadurch gekennzeichnet, daß man die Lösung $L_2$, bevor man sie in die Stufe c) überführt, einem Wärmeaustausch mit der flüssigen Phase $S_3$ unterwirft, und zwar bevor die flüssige Phase $S_3$ den Anstieg des Druckniveaus der Stufe f) erfahren hat, wobei dieser Wärmeaustausch die Bildung einer Gasphase $G_3$ des Kohlendioxids aus der flüssigen Phase $S_3$ bewirkt, und daß man diese Gasphase $G_3$ von der restlichen flüssigen Phase $S_3$ abtrennt und die abgetrennte Gasphase $G_3$ mit der flüssigen Phase $S_1$ vermischt, welche einer Drucksenkung der Stufe d) unterworfen wurde, worauf man die resultierende Absorptionswärme an die Lösung $L_3$ abgibt, nachdem das Druckniveau derselben angehoben wurde, und man anschließend das Druckniveau der restlichen Phase $S_3$ auf Stufe f) anhebt.

6. Verfahren gemäß Ansprüchen 1 bis 5, dadurch gekennzeichnet, daß das Lösungsmittel für Kohlendioxid ein Amin ist.

**Claims**

1. Process for producing cold and/or heat, making use of an absorption cycle characterized in that:

a) a solution $L_1$ of carbon dioxide in a liquid phase of a solvent for carbon dioxide is subjected to heating, under at least partial carbon dioxide desorption conditions, so as to form a gaseous phase $G_1$ of carbon dioxide and a desorbed liquid phase $S_1$, and the gaseous phase $G_1$ is separated from the liquid phase $S_1$,

b) the gaseous phase $G_1$ is admixes with a liquid phase $S_2$ which is a solvent for carbon dioxide, and the evolved heat is removed, so as to dissove at least a portion of the gaseous phase $G_1$ into the solvent liquid phase $S_2$ and to obtain a solution $L_2$ of carbon dioxide in the solvent liquid phase $S_2$,

c) the pressure of the solution $L_2$ is decreased and heat is supplied to this solution, under conditions of at least partial carbon dioxide desorption, so as to form a gaseous phase $G_2$ of carbon dioxide and a desorbed liquid phase $S_3$, and the phase $G_2$ is separated from the phase $S_3$,

d) the pressure of the desorbed liquid phase $S_1$ is decreased so as to bring it substantially to the pressure level of the phase $G_2$, the phase $S_1$ is admixed with the phase $G_2$ so as to obtain a solution $L_3$ of the phase $G_2$ in the phase $S_1$, and heat resulting from the absorption of the phase $G_2$ into the phase $S_1$ is

removed from the solution $L_3$, so as to decrease the temperature of the said solution $L_3$, said heat being transferred, successively, partly to the recompressed solution $L_3$, as set forth in step (e), then, for the other part to an external medium,

e) the pressure level of the solution $L_3$ obtained in step (d) is increased so as to bring it substantially to the pressure level of the solution $L_1$, the recompressed solution $L_3$ is heated using a portion of the absorption heat transferred from the solution $L_3$, as set forth in step (d), and then the recompressed and heated solution $L_3$ is fed back to step (a) to reconstitute the solution $L_1$, and

f) the pressure level of the desorbed liquid phase $S_3$ is increased so as to bring it substantially to the pressure level of the gaseous phase $G_1$ and then at least a portion of the liquid recompressed phase $S_3$ is fed back to step (b) to reconstitute at least a portion of the liquid phase $S_2$.

2. A process according to claim 1, wherein the solution $L_2$ produced in step (b), before proceeding to step (c), is subjected to a heat exchange with the liquid phase $S_3$.

3. A process according to claim 1 or 2, wherein the same chemical compound is used to constitute the liquid phases of solvent for carbon dioxide used in step (a) and step (b).

4. A process according to any one of claims 1 to 3, wherein the solution $L_3$ of step (d) is put in direct communication with the desorbed liquid phase $S_3$ of step (c) so as to maintain substantially constant the levels of the solution $L_3$ and of the liquid phase $S_3$.

5. A process according to any one of claims 1 to 4 wherein the solution $L_2$ is subjected, before being transferred to step (c), to a heat exchange with the liquid phase $S_3$, said exchange being effected before subjecting the liquid phase $S_3$ to a pressure increase in step (f), said heat exchange resulting in the formation of a gaseous phase $G_3$ of carbon dioxide from the liquid phase $S_3$, and wherein said gaseous phase $G_3$ is separated from the residual liquid phase $S_3$ and the so separated gaseous phase $G_3$ is admixed with the liquid phase $S_1$ previously subjected to the pressure decrease of step (d) and the resultant absorption heat is transferred to the solution $L_3$, after the pressure increase thereof, and then the residual liquid phase $S_3$ is subjected to the pressure increase of step (f).

6. A process according to any one of claims 1 to 5 wherein the solvent of carbon dioxide is an amine.

Figure 1

Figure 2

Figure 3

Figure 4